**Europäisches Patentamt**

**European Patent Office**

**Office européen des brevets**

(19)

(11) Numéro de publication : **0 047 209**
**B1**

(12) **FASCICULE DE BREVET EUROPÉEN**

(45) Date de publication du fascicule du brevet :
**11.04.84**

(21) Numéro de dépôt : **81401346.2**

(22) Date de dépôt : **27.08.81**

(51) Int. Cl.³ : **F 16 F 9/50, B 60 G 17/00,
B 64 C 25/58**

(54) **Amortisseur.**

(30) Priorité : **29.08.80 FR 8018732**

(43) Date de publication de la demande :
**10.03.82 Bulletin 82/10**

(45) Mention de la délivrance du brevet :
**11.04.84 Bulletin 84/15**

(84) Etats contractants désignés :
**DE GB IT**

(56) Documents cités :
**FR-A- 2 154 882**
**FR-A- 2 386 427**
**US-A- 3 124 368**

(73) Titulaire : **MESSIER-HISPANO-BUGATTI (S.A)
5, rue Louis Lejeune
F-92120 Montrouge (FR)**

(72) Inventeur : **Masclet, Jean
11 Bd Davout
F-75020 Paris (FR)**
Inventeur : **Veaux, Jacques
16 Bd de la Liberté
F-92320 Chatillon (FR)**

(74) Mandataire : **Flavenot, Bernard
Société S.E.D.I.C. 40 rue Victor Basch
F-92120 Montrouge (FR)**

EP 0 047 209 B1

Amortisseur

La présente invention concerne les amortisseurs et plus particulièrement les amortisseurs que les techniciens ont l'habitude de dénommer amortisseur bi-chambre, ces deux chambres étant remplies généralement d'un gaz compressible formant ressort.

Les amortisseurs sont bien connus, et peuvent être par exemple définis comme dans les documents antérieurs, comme par exemple le brevet français 2 154 882. De même, et plus particulièrement les amortisseurs bi-chambres, comme celui décrit dans le brevet français 2 448 662, sont bien connus. Ils sont généralement constitués par une tige coulissante dans un cylindre par l'intermédiaire d'un piston, pour délimiter au moins deux chambres.

Le piston comporte des moyens de communication de fluide entre ces deux chambres pour laminer un fluide comme par exemple de l'huile compressible.

Ces deux chambres contiennent du fluide incompressible mais aussi un fluide compressible comme un gaz qui a la fonction ressort.

De plus, le fond du cylindre comporte une troisième chambre dans laquelle se déplace un piston séparateur pour diviser cette troisième chambre en deux logements à volume variable inversement proportionnel, un des logements étant rempli d'un fluide compressible comme un gaz pour donner aussi une fonction ressort, et l'autre logement est mis en communication avec la chambre définie dans le cylindre pour que du fluide puisse le remplir, et éventuellement repousser le piston séparateur à l'encontre du gaz, à partir d'un certain seuil de pression.

Cependant, dans une position détendue, le piston séparateur est en butée dans une position déterminée, le volume de gaz du logement étant complètement détendu mais à une pression suffisamment élevée.

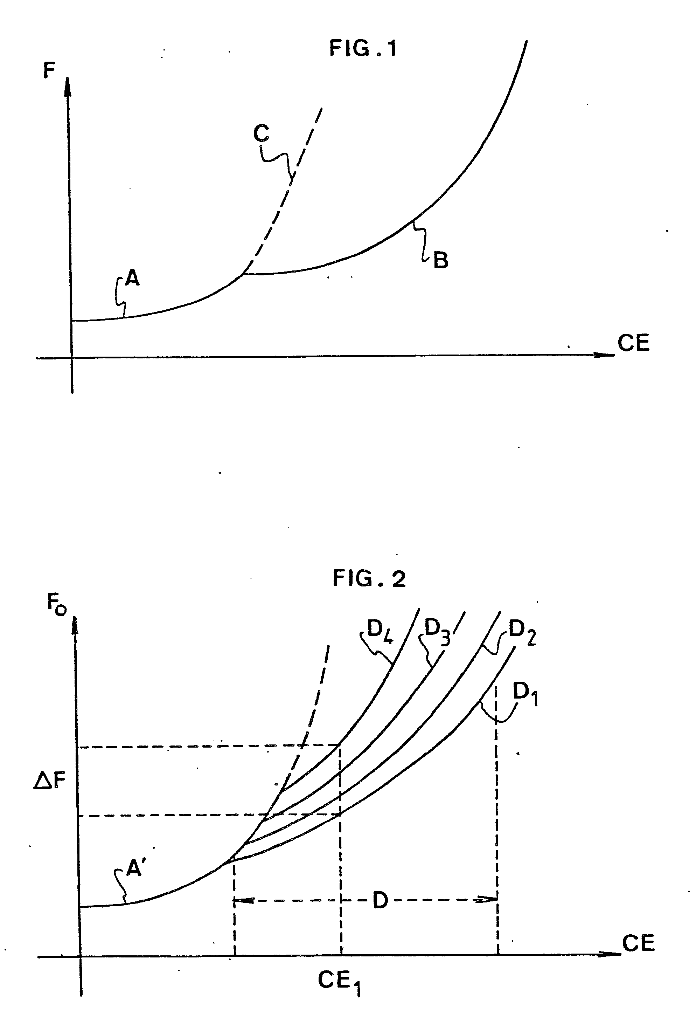

Dans cette hypothèse de départ, si l'amortisseur commence à être comprimé, il se produit en premier la compression du volume de gaz dans l'une des deux premières chambres jusqu'à un certain seuil de pression, puis ensuite à partir de ce seuil, c'est le deuxième volume de gaz qui se comprime. Ces fonctions sont connues et la figure 1 représente une courbe donnant les variations de la course de l'enfoncement d'un amortisseur en fonction de la force qui lui est appliquée. Sur cette courbe apparaissent deux parties, la première A, qui représente la compression du premier fluide compressible dit à basse pression, et ensuite la deuxième B qui représente la compression du second fluide compressible dit à haute pression, ce qui permet d'obtenir un amortissement de force sur une course d'amortisseur assez longue sans avoir une raideur comme celle qui serait obtenue si la courbe avait l'allure de la portion C de la courbe A qui est représentée en pointillés. En effet, il apparaît qu'il est obtenu une faible variation de course de l'amortisseur pour une importante variation de force. Ces amortisseurs donnent de bons résultats, mais, en fait, on s'aperçoit que lorsqu'ils sont montés sur des aérodynes, ils peuvent être mal adaptés à toutes les circonstances. En effet, si par exemple un aérodyne décolle pour une mission, il est généralement chargé en carburant, en matériel, en hommes, etc.

Il faut donc que les amortisseurs puissent jouer leur rôle pour ces fortes charges. Par contre, après avoir effectué sa mission, l'avion revient en ayant consommé son carburant et parachuté le matériel et les hommes ; il sera, dans ce cas, considérablement allégé. Ceci fait que, si au départ les amortisseurs sont parfaitement adaptés avec la raideur voulue, au retour, ils seront beaucoup trop raides et risqueraient de donner par exemple des vibrations parasites à l'aéronef qui sont nuisibles et qui peuvent l'endommager et un inconfort lors du roulage sur la piste. La présente invention a pour but de pallier ces inconvénients et de réaliser un amortisseur permettant une adaptabilité à diverses conditions d'utilisation, notamment par sa raideur.

Plus particulièrement, la présente invention a pour objet un amortisseur comprenant une tige, coulissante dans un cylindre par l'intermédiaire d'un piston pour déterminer au moins deux chambres, à volume variable, des moyens pour mettre en communication les deux dites chambres, une des deux chambres comprenant des premiers moyens élastiques, à une première pression donnée, l'autre chambre comprenant des deuxièmes moyens élastiques, une seconde pression donnée caractérisé par le fait que lesdits deuxièmes moyens sont commandables en fonction au moins d'un paramètre, correspondant à une force à absorber, afin d'établir une raideur choisie desdits deuxièmes moyens.

D'autres caractéristiques et avantages de la présente invention apparaîtront au cours de la description suivante donnée en regard des dessins annexés à titre illustratif mais nullement limitatif dans lesquels :

la figure 1 représente une courbe donnant la force en fonction de la course d'enfoncement pour les amortisseurs connus, déjà mentionnée précédemment.

la figure 2 représente une courbe donnant la force en fonction de la course d'enfoncement pour expliquer le fonctionnement et les avantages d'un amortisseur selon l'invention, et,

la figure 3 représente, sous forme schématique, un mode de réalisation d'un amortisseur selon l'invention.

La figure 2 représente un ensemble de courbes qui donnent des variations de forces à absorber FO en fonction de la course d'enfoncement CE pour un amortisseur dit bi-chambres c'est-à-dire à deux volumes de fluide compressible respectivement haute et basse pression.

Comme il a été rappelé ci-avant à l'appui de la figure 1, cette fonction comprend essentiellement deux portions A et B figure 1.

La portion B donne une seule valeur de force pour une seule valeur d'enfoncement, de ce fait, différentes forces à absorber entraînent des variations importantes de course d'enfoncement pour l'amortisseur.

Les moyens mis en œuvre dans l'amortisseur selon l'invention permettent d'obtenir une fonction (figure 2) de la force à absorber en fonction de la course dans laquelle sur au moins une partie D il est possible d'obtenir pour plusieurs valeurs de force $\Delta F$, en théorie du moins avec une bonne approximation, une seule valeur de variation de la course d'enfoncement CE1, et cela d'une façon voulue, automatiquement ou non, en fonction de différents paramètres. Ainsi, en se reportant à la figure 2 suivant les conditions d'utilisation, il est possible de choisir par exemple l'une des variations possibles $D_1$, $D_2$, $D_3$, $D_4$... pour la raideur de l'amortisseur. Pour des forces importantes à absorber, une fonction comme $D_4$ sera choisie de préférence, en se reportant à l'exemple donné précédemment, dans le cas du départ de l'avion. Mais, par contre, pour des forces plus faibles une fonction $D_1$ ou $D_2$ sera alors choisie, c'est le cas où l'avion revient à vide.

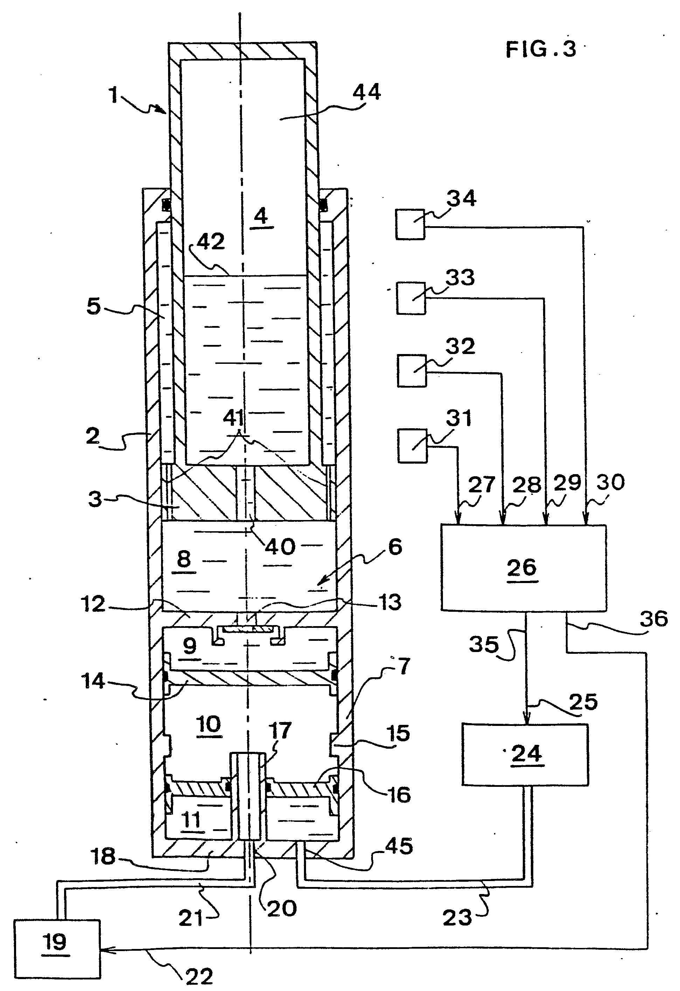

Un mode de réalisation d'un amortisseur donnant ces résultats et avantages est représenté d'une façon schématique sur la figure 3.

Cet amortisseur comprend une tige 1 coulissant à l'intérieur d'un cylindre 2 par l'intermédiaire d'un piston 3. Ce piston 3 détermine dans le cylindre 2 au moins deux chambres, ici trois chambres 4, 5 et 6, la chambre 4 dans la tige 1, la chambre 5 entre la tige 1 et le cylindre 2, et la chambre 6 dans le cylindre après le piston 3 dans l'extrémité 7 du cylindre 2.

Le piston 3 comprend des moyens de communication 40 et 41 pour relier les chambres 6,4 et 5,4. Cette chambre 6 est partagée en plusieurs parties :

— une première 8 entre le piston et une paroi transversale 12 comportant un clapet de laminage 13.

— une seconde 9 entre la paroi 12 et un piston séparateur 14 coulissant de façon étanche dans l'extrémité 7 du cylindre. Le piston coulisse dans le fond entre deux butées, la première constituée par la paroi 12 et la seconde 15 constituée par une saillie dans la paroi interne du cylindre 2.

— une troisième 10 entre le piston séparateur 14 et un fond mobile 16 coulissant de façon étanche dans l'extrémité 7 du cylindre et autour d'une buse annulaire centrale 17 fixée sur le fond fixe 18 fermant l'extrémité 7 du cylindre 2.

— un quatrième 11 entre le fond mobile 16, l'extrémité 7 du cylindre 2 et son fond fixe 18, et la buse 17 pour former une chambre de vérin pouvant être alimentée en fluide par l'orifice 45 réalisé dans le fond fixe 18.

Il est précisé que le fond mobile se déplace aussi entre deux butées, la partie en saillie 15 et le fond fixe 18. L'espace 10 est relié avantageusement à une source de fluide compressible 19 par la buse 17, un orifice 20 dans le fond fixe 18 et une conduite 21. Cette source peut délivrer un fluide compressible comme un gaz de façon déterminée et éventuellement commandable par un signal appliqué à son entrée de commande 22.

L'espace 11 est relié par un conduit 23 à une source de fluide incompressible 24 commandable à son entrée 25 par un signal d'ordre.

Enfin, un calculateur 26 reçoit sur ses entrées 27, 28, 29, 30 des signaux représentatifs de différents paramètres, donnés par exemple par des capteurs 31, 32, 33, 34 délivrant respectivement et à titre illustratif, des signaux représentatifs d'effort à absorber, des efforts de consigne pour choisir la fonction désirée (figure 2), des angles de roulis, des vitesses de l'aéronef, etc.

Les sorties 35 et 36 du calculateur 26 sont alors reliées aux entrées de commande 22 et 25 respectivement de la source de fluide compressible 19 et de fluide incompressible 24.

Les chambres 4,5 et les espaces 6,9 contiennent un fluide incompressible comme de l'huile jusqu'à un niveau par exemple 42 dans la chambre 4 et un fluide compressible 44 comme un gaz formant ressort au-dessus du niveau 42. L'amortisseur selon la figure 3 et, en conformité avec la figure 2, fonctionne de la façon suivante.

Il est tout d'abord supposé que le volume de gaz contenu dans l'espace 10 est initialement à une pression déterminée, supérieure à celle du fluide 44 contenu au-dessus du niveau 42.

Le piston séparateur 14 est en butée contre la paroi 12, et le fond mobile 16 dans une position déterminée, par exemple en butée contre le fond fixe 18 du cylindre 2. De ce fait, la pression dans l'espace 10 a une certaine valeur.

Si la tige 1 s'enfonce sous l'action d'une force dans le cylindre, le fluide compressible en 44 se comprime, de l'huile passe alors de la chambre 6 vers les chambres 4 et 5, jusqu'à ce que la valeur de la pression du fluide 44 égale celle du fluide compressible dans l'espace 10.

A ce moment, le piston 14 est repoussé par du fluide passant par le clapet 13 dans l'espace 9. Le fluide en 10 se comprime en partant d'une valeur donnée qui sera définie comme relativement faible. Ces deux fonctions sont représentées par la première partie de la courbe A' figure 2, jusqu'au moment où le piston séparateur 14 s'enfonce, et à partir de ce moment par la deuxième partie de la courbe par exemple D1 puisque la pression du fluide dans l'espace 10 a été choisie relativement faible. L'amortisseur ainsi obtenu a une raideur assez faible, c'est par exemple le cas pour un aéronef relativement peu chargé.

Par contre, si on désire le même amortisseur, mais pour une charge plus importante, au moyen du calculateur, la source de fluide 24 est commandée pour alimenter en fluide incompressible l'espace 11. Le fond mobile se déplace pour prendre une position qui donnera à la pression du fluide dans l'espace 10 une valeur donnée initiale, sachant que le piston séparateur 14 est en butée contre la paroi 12. Dans ce cas, à partir de ces conditions initiales définies ci-dessus, si l'amortisseur est soumis à une force, il fonctionne dans son principe de la même façon que précédemment décrit, mais il suit la fonction représentée par les portions de courbes A' et l'une des portions $D_2$, $D_3$, $D_4$ suivant la position du fond 16 dans le cylindre, bien entendu avec la même quantité de fluide compressible dans l'espace 10.

Ci-avant il a été donné un exemple simple, mais il est bien évident qu'avec un programme adapté, il pourra être obtenu des variations simultanées et/ou continues, soit de la position du fond mobile 16 entre ses deux butées, soit de la quantité de fluide compressible, et toutes autres combinaisons possibles.

**Revendications**

1. Amortisseur comprenant une tige (1) coulissant dans un cylindre (2) par l'intermédiaire d'un piston (3) pour déterminer au moins deux chambres (4,6) à volume variable, des moyens (40, 41) pour mettre en communication les deux dites chambres, une des deux chambres (4) comprenant des premiers moyens élastiques (44) à une première pression donnée, l'autre chambre (6) comprenant des deuxièmes moyens (10) élastiques à une seconde pression donnée, caractérisé par le fait que lesdits deuxièmes moyens sont commandables en fonction au moins d'un paramètre, correspondant à une force à absorber, afin d'établir une raideur choisie desdits deuxièmes moyens.

2. Amortisseur selon la revendication 1, caractérisé par le fait que lesdits moyens commandables en fonction d'au moins un paramètre correspondant à une force à absorber comprennent dans une des deux chambres (6) un piston séparateur (14) et un fond mobile (16) coulissant pour déterminer un espace (10), un fluide compressible dans ledit espace (10), des moyens (12) pour donner une position de référence audit piston (14) séparateur, des moyens (26, 24) pour commander la position dudit fond mobile (16) en fonction d'un signal représentatif d'une force à absorber.

3. Amortisseur selon la revendication 2, caractérisé par le fait que lesdits moyens pour commander la position dudit fond mobile comprennent une chambre de vérin (11), dont une paroi est constituée par ledit fond mobile (16) une source de fluide (24) incompressible commandable dont la sortie est reliée à l'entrée de · ladite chambre de vérin (11) et un organe calculateur (26) apte à délivrer un signal de commande applicable à ladite source.

4. Amortisseur selon l'une des revendications 2 et 3, caractérisé par le fait que ledit espace (10) est relié à une source de fluide compressible (19) commandable, dont l'entrée de commande est reliée à la sortie dudit organe· calculateur (26).

5. Amortisseur selon l'une des revendications 3 et 4, caractérisé par le fait que ledit organe calculateur comprend un ensemble d'entrées (27, 28, 29, 30) apte à recevoir des signaux provenant de capteurs (31, 32, 33, 34) de différents paramètres.

**Claims**

1. A shock absorber comprising a rod (1) sliding in a cylinder (2) via a piston (3) for determining at least two chambers (4,6) of variable volume, means (40, 41) for putting said two chambers into communication, one of the two chambers (4) including first resilient means (44) at a first given pressure, the other chamber (6) including second resilient means (10) at a second given pressure, characterized by the fact that said second means are controllable as a function of at least one parameter corresponding to a force to be absorbed, thereby establishing a chosen stiffness for said second means.

2. A shock absorber according to claim 1, characterized by the fact that said means controllable as a function of at least one parameter corresponding to a force to be absorbed comprise, in one of said two chambers (6), a separator piston (14) and a slidable moving end plate (16) for determining a space (10), a compressible fluid in said space (10), means (12) for giving a reference position to said separator piston (14), and means (26, 24) for controlling the position of said moving end plate (16) as a function of a signal representative of a force to be absorbed.

3. A shock absorber according to claim 2, characterized by the fact that said means for controlling the position of said moving end plate comprise a jack chamber (11) having one wall constituted by said moving end plate (16), as controllable source of incompressible fluid (24) having an outlet connected to an inlet to said jack chamber (11), and a calculating unit (26) suitable for delivering a control signal applicable to said source.

4. A shock absorber according to claim 2 or 3, characterized by the fact that said space (10) is connected to a controllable source of compressible fluid (19) having a control input connected to an output from said calculating unit (26).

5. A shock absorber according to claim 3 or 4, characterized by the fact that said calculating unit includes a set of inputs (27, 28, 29, 30) suitable for receiiving signals from sensors (31, 32, 33, 34) of different parameters.

**Ansprüche**

1. Stoßdämpfer mit einer Kolbenstange (1), die in einem Zylinder (2) über einen Kolben (3) geführt ist, um wenigstens zwei Kammern (4,6) mit variablem Volumen zu bilden, und mit Mitteln (40, 41) zum Inverbindungbringen der beiden Kammern, wobei eine der beiden Kammern (4) erste elastische Mittel (44) bei einem ersten gegebenen Druck umfaßt, während die andere Kammer (6) zweite elastische Mittel (10) bei einem zweiten gegebenen Druck umfaßt, dadurch gekennzeichnet, daß die zweiten Mittel als Funktion wenigstens eines Parameters entsprechend einer zu absorbierenden Kraft steuerbar sind, um eine gewählte Steifigkeit der zweiten Mittel zu etablieren.

2. Stoßdämpfer nach Anspruch 1, dadurch gekennzeichnet, daß die als Funktion wenigstens eines Parameters entsprechend einer zu absorbierenden Kraft steuerbaren Mittel in einer der beiden Kammern (6) einen Trennkolben (14) und einen beweglichen Boden (16), der zur Bildung eines Zwischenraums (10) geführt ist, ein kompressibles Fluid in dem Zwischenraum (10), Mittel (12) zur Vorgabe einer Bezugsposition für den Trennkolben (14) und Mittel (26, 24) zum Steuern der Position des beweglichen Bodens (16) als Funktion eines Signals, das für eine zu absorbierende Kraft repräsentativ ist, umfassen.

3. Stoßdämpfer nach Anspruch 2, dadurch gekennzeichnet, daß die Mittel zum Steuern der Position des beweglichen Bodens eine Zylinderkammer (11), deren eine Wandung durch den beweglichen Boden (16) gebildet wird, eine steuerbare Quelle (24) für ein inkompressibles Fluid, deren Ausgang mit dem Eingang dieser Zylinderkammer (11) verbunden ist, und ein Rechnerorgan (26) umfassen, das geeignet ist, ein Steuersignal zu liefern, das an die Quelle anlegbar ist.

4. Stoßdämpfer nach einem der Ansprüche 2 oder 3, dadurch gekennzeichnet, daß der Zwischenraum (10) mit einer steuerbaren Quelle (19) für ein kompressibles Fluid verbunden ist, deren Steuereingang mit dem Ausgang des Rechnerorgans (26) verbunden ist.

5. Stoßdämpfer nach einem der Ansprüche 3 oder 4, dadurch gekennzeichnet, daß das Rechnerorgan eine Gruppe von Eingängen (27, 28, 29, 30) umfaßt, die geeignet sind, Signale aufzunehmen, die von Nehmern (31, 32, 33, 34) für verschiedene Parameter stammen.

FIG . 1

FIG . 2

FIG.3

0 047 209